# EUROPEAN PATENT SPECIFICATION

(11) **EP 3 147 453 B1**
(45) Date of publication and mention of the grant of the patent: **04.08.2021**
(21) Application number: 16189749.1
(22) Date of filing: 20.09.2016
(51) Int. Cl.: F01D 5/14, F01D 17/02, F01D 21/00

(54) **TURBOMACHINE AND METHOD FOR IDENTIFYING BUCKET DEFORMATION IN TURBOMACHINERY**
TURBOMASCHINE UND VERFAHREN ZUR IDENTIFIZIERUNG VON BUCKET-VERFORMUNG IN TURBOMASCHINEN
TURBOMACHINE ET PROCÉDÉ D'IDENTIFICATION DE DÉFORMATION D´AUBE DE TURBINE

(30) Priority: 25.09.2015 US 201514865015
(43) Date of publication of application: 29.03.2017
(73) Proprietor: General Electric Company, Schenectady, NY 12345 (US)
(72) Inventor: CUI, Yan, Greenville, SC 29615 (US); FENG, Ganjiang, Greenville, SC 29615 (US); KOTTILINGAM, Srikanth Chandrudu, Greenville, SC 29615 (US); LIN, Dechao, Greenville, SC 29615 (US); TOLLISON, Brian Lee, Greenville, SC 29615 (US)
(74) Representative: BRP Renaud & Partner mbB Rechtsanwälte Patentanwälte Steuerberater

(56) References cited:
- EP-A2- 2 594 914
- EP-A2- 2 851 509
- WO-A1-2008/110975
- US-A1- 2011 133 949
- US-A1- 2015 090 882
- None

## Description

### TECHNICAL FIELD

The disclosure relates generally to turbomachinery, and more particularly, to turbine buckets and turbomachines which can be used to identify bucket deformation. Embodiments of the present disclosure also include methods for identifying bucket deformation in turbomachinery.

### BACKGROUND

Turbomachinery such as turbine systems can generate power for, e.g., electric generators. A working fluid such as hot gas or steam can flow across sets of turbine blades (generally known in the art as "buckets") mechanically coupled to a rotor of the turbine system. The force of the working fluid on the blades causes those blades (and the coupled body of the rotor) to rotate. The rotor body can be coupled to the drive shaft of a dynamoelectric machine such as an electric generator. Initiating rotation of the turbine rotor can also rotate the drive shaft in the electric generator to generate an electrical current and a particular power output.

Buckets may be subject to mechanical stress over their lifespan and the operation of a turbomachinery system. In some cases, stress can cause the dimensionality of a turbine bucket or other component to change over time. In one example, a phenomenon known as "creep" can refer to a gradual lengthening deformation of a component when subjected to material stresses in a particular direction over time. Turbine buckets may undergo creep and/or other types of deformation when subject to particular operating circumstances and/or operating times. Conventional methods for identifying deformation, such as creep, may include removing the turbine buckets from the structure of a turbomachine to execute a diagnostic test. US2015090882 shows magnets holding a blade mounted instrument

### SUMMARY

A first aspect of the invention provides a turbomachine according to claim 1.

A second aspect of the invention provides a method for identifying bucket deformation in a turbomachine according to claim 7.

### BRIEF DESCRIPTION OF THE DRAWINGS

These and other features of the disclosed system will be more readily understood from the following detailed description of the various aspects of the system taken in conjunction with the accompanying drawings that depict various embodiments, in which:
FIG. 1 shows a schematic view of a turbomachine according to embodiments of the present disclosure.
FIG. 2 is a cross-sectional view of a turbomachine according to embodiments of the present disclosure.
FIG. 3 is a partial perspective view of a turbine bucket according to embodiments of the present disclosure.
FIG. 4 is an illustrative plot of magnetic field strength versus displacement from a magnetic material according to embodiments of the present disclosure.
FIG. 5 is an illustrative environment of a computing device operatively connected to a magnetic sensor according to embodiments of the present disclosure.

It is noted that the drawings are not necessarily to scale. The drawings are intended to depict only typical aspects of the disclosure, and therefore should not be considered as limiting its scope. In the drawings, like numbering represents like elements between the drawings.

### DETAILED DESCRIPTION

In the following description, reference is made to the accompanying drawings that form a part thereof, and in which is shown by way of illustration specific exemplary embodiments in which the present teachings may be practiced. These embodiments are described in sufficient detail to enable those skilled in the art to practice the present teachings and it is to be understood that other embodiments may be utilized and that changes may be made without departing from the scope of the present teachings. The following description is, therefore, merely illustrative.

Spatially relative terms, such as "inner," "outer," "underneath," "below," "lower," "above," "upper," "inlet," "outlet," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "underneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

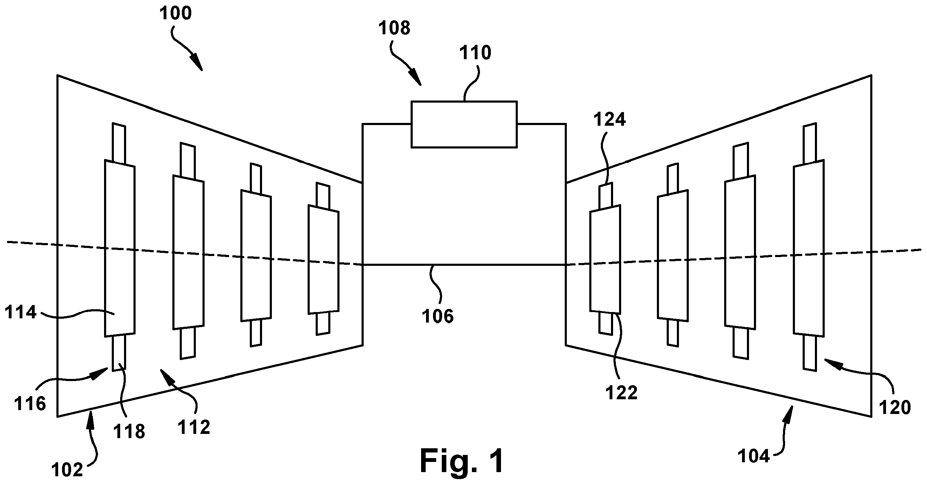

As indicated above, the disclosure provides structures and methods for identifying bucket deformation in a turbomachine. FIG. 1 shows a turbomachine 100 that includes a compressor portion 102 operatively coupled to a turbine portion 104 through a shared compressor/turbine shaft 106. Compressor portion 102 is also fluidically connected to turbine portion 104 through a combustor assembly 108. Combustor assembly 108 includes one or more combustors 110. Combustors 110 may be mounted to turbomachine 100 in a wide range of configurations including, but not limited to, being arranged in a can-annular array. Compressor portion 102 includes a plurality of compressor rotor wheels 112. Rotor wheels 112 include a first stage compressor rotor wheel 114 having a plurality of first stage compressor rotor blades 116 each having an associated airfoil portion 118. Similarly, turbine portion 104 includes a plurality of turbine rotor wheels 120 including a first stage turbine wheel 122 having a plurality of turbine buckets 124, e.g., provided as first stage turbine rotor blades. Stationary blades within turbine portion 104, discussed elsewhere herein, can direct gases through turbine portion 104 against turbine buckets 124 of turbine portion 104. Although embodiments of the present disclosure may be described as positioned within turbine portion 104, it is understood that various embodiments can optionally be positioned in other components or areas of turbomachine 100 including, e.g., compressor portion 102. In addition, embodiments of the present disclosure can be adapted for use in other forms of machinery, e.g., steam turbines, water turbines, aircraft engines, independent compressors, etc.

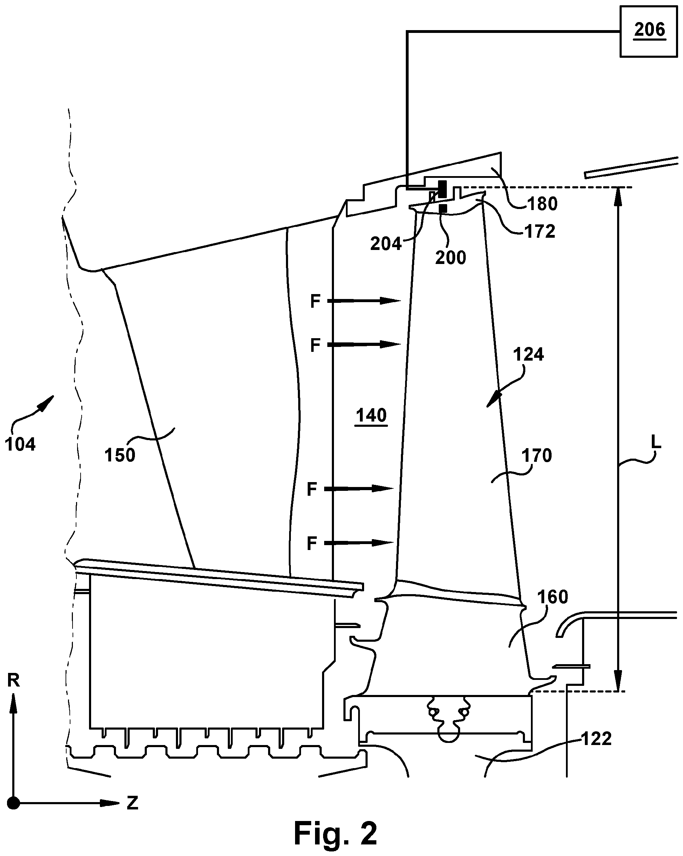

Referring to FIG. 2, a partial cross-sectional view of turbine bucket 124 within turbine portion 104 of turbomachine 100 (FIG. 1) according to embodiments of the present disclosure is shown. Turbine bucket 124 can be positioned within a flow path 140 for accommodating operating fluids such as hot combustion gases, steam, etc., which can flow generally along the direction noted with flow lines F. The operative fluid within flow path 140 can reach turbine bucket(s) 124 as directed by the position and contours of a stationary blade 150, also known in the art as a nozzle. Turbine portion 104 is shown extending along a rotor axis Z of turbine wheel 122 (e.g., coaxial with shaft 106 (FIG. 1)), and with a radial axis R extending outwardly therefrom. In the case of a gas turbine, flow path 140 with turbine bucket 124 can be a hot gas path (HGP) adapted to transmit combusted gases as the operative fluid, such that turbine bucket 124, stationary blade 150, and other components discussed herein include materials adapted to withstand temperatures of, e.g., more than approximately 1000 degrees Celsius (° C). Turbine bucket 124 can include a group of subcomponents defined by reference to their structure and position. A base 160 can provide a mechanical connection to shaft 106, e.g., by direct attachment to turbine wheel 122 with dovetail protrusions and/or slots. Base 160 of each turbine bucket 124 can thereby join turbine bucket 124 to shaft 106 (e.g., through turbine wheel 122) during operation. Turbine bucket 124 may undergo one or more types of deformation, e.g., expansion deformation from mechanical creep, after being in use for several service hours. In turbine portion 104, turbine bucket 124 may expand, e.g., substantially in the direction of deformation axis R. However, it is understood that that deformation axis R may have a different orientation and/or direction in other implementations. For instance, it may be possible for turbine bucket(s) 124 to additionally or alternatively deform in a rotational and/or circumferential direction relative to shaft 106.

An airfoil 170 of turbine bucket 124 extends outwardly from base 160, and can be oriented substantially along (i.e., extending in a direction parallel with or within at most approximately ten degrees of) radial axis R. A radially outer end of airfoil 170 includes a bucket tip 172, e.g., including a surface contour for further directing the flow of operating fluids in flow path 140 against turbine bucket 124. Bucket tip 172 is radially proximal to a shroud 180 for defining a rotation path of turbine bucket 124. A portion of flow path 140 can be positioned radially between turbine bucket 124 and shroud 180. Although one stationary blade 150 is shown in the cross-sectional view of FIG. 2, it is understood that multiple turbine buckets 124 and stationary blades 150 can extend radially from turbine wheel 122, e.g., extending laterally into and/or out of the plane of the page. A length of turbine bucket 124 can be defined, e.g., as the radial distance between a radially inner end of base 160 and a radially outer end of bucket tip 172 as noted by line "L." However, it should be understood that the length of turbine bucket 124 can be alternatively defined.

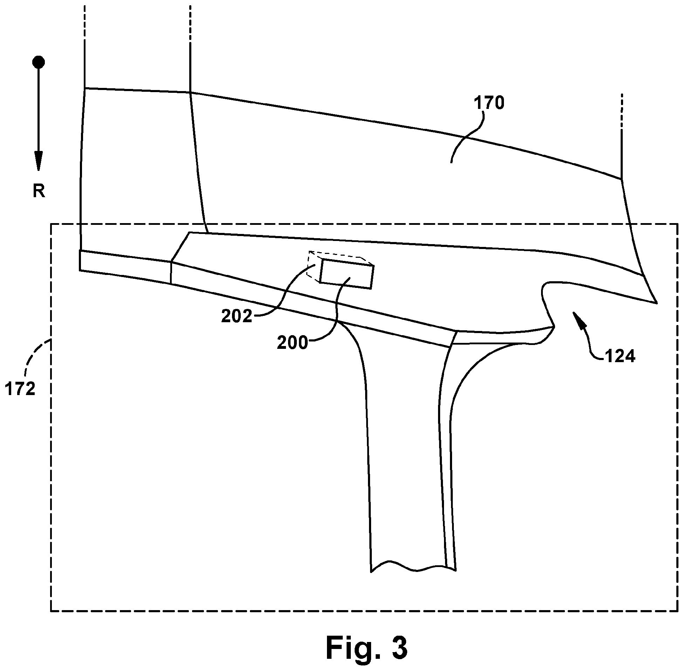

Turning to FIG. 3, a partial perspective view an enlarged tip of airfoil 170 of turbine bucket 124 is shown. A radially outer region of airfoil 170 is provided in the form of a bucket tip 172, e.g., having a distinct surface contour and/or structural features. Turbine bucket 124 includes a magnetized material 200 coupled to airfoil 170, at bucket tip 172, and thereby positioned proximal to a radially outer end of turbine bucket 124. Although magnetized material 200 is shown in FIG. 3 as being located within bucket tip 172, it is understood that magnetized material 200 can additionally or alternatively be positioned at other regions of airfoil 170. Magnetized material 200 can generally be composed of any currently known or later developed substance which generates a magnetic field. As specific examples, magnetized material 200 can include one or more para-magnetic and/or ferromagnetic alloys, e.g., nickel-based and/or cobalt based-alloys. Magnetized material 200 can be formed via one or more methodologies otherwise applied to form a metallic material on another structure, such as brazing (including, e.g., vacuum brazing, braze welding, torch brazing, etc.), welding (including, e.g., gas tungsten arc welding and/or other welding processes which use an inert gas), and/or other techniques. Magnetized material 200, in an example embodiment, can include an alloy having the chemical formula Ni₁₉Co₁₉Fe₃B and including mass composition percentages of, e.g., approximately 19% Cobalt (Co), approximately 19% Iron (Fe), approximately 0.05% Aluminum (Al), approximately 0.05% Titanium (Ti), between approximately 2.75% and approximately 3.75% Boron (B), between approximately 6% and 13% Chromium (Cr), and with the remainder being composed of, e.g., Nitrogen (N). Example materials which can form or be included with magnetized material 200 are discussed generally in U.S. Patent Application Publication US 2014/0227550.

In some embodiments, turbine bucket 124 can be machined to form a recess or a cavity 202 positioned, e.g., on an outer surface of airfoil 170. Recess 202 can be sized to house a corresponding amount of magnetized material 200 therein. For example, recess 202 can be formed by selectively removing a surface area of airfoil 170 to define a particular volume. Magnetized material 200 can be formed in recess 202, e.g., by way of brazing or other processes of forming magnetized materials or other metals, e.g., deposition. To reduce aerodynamic losses such as those arising from a contour mismatch between the outer surface of magnetized material 200 and/or turbine bucket 124, an outer surface of magnetized material and turbine bucket 124 can be planarized such that magnetized material 200 is substantially planar with an outer surface profile of turbine bucket 124. Planarizing magnetized material 200 relative to the surface of turbine bucket 124 can substantially retain the original surface profile of turbine bucket 124. By extension, the aerodynamic properties of magnetized material 200 and turbine bucket 124 within flow path 140 can be substantially identical to those of turbine bucket(s) 124 without magnetized material 200 therein.

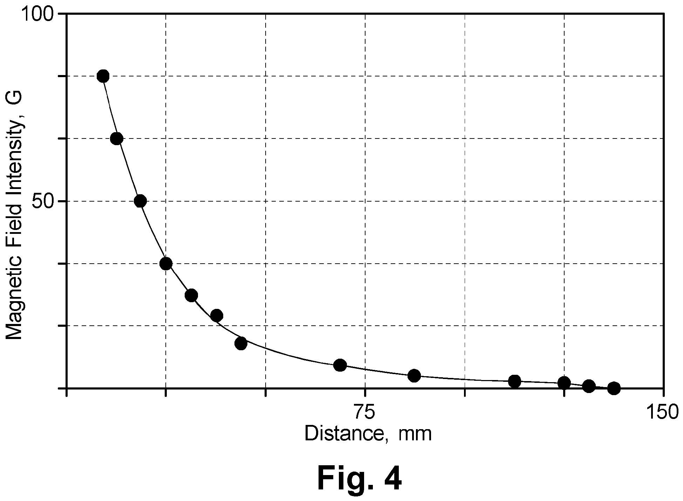

Referring to FIGS. 2 and 4, the magnetic field strength of magnetized material 200 (measured, e.g., in Gauss (G)) can decay relative to the separation distance ("distance," measured, e.g., in millimeters (mm)) between magnetized material 200 and a magnetic sensor 204. As turbine bucket 124 undergoes a length deformation, the location of magnetized material 200 therein relative to magnetic sensor 204 changes. As a result, deformation of turbine bucket 124 can affect the magnetic field strength measured with magnetic sensor 204 at a fixed position. Example embodiments of magnetic sensor 204 are described in detail elsewhere herein. In the example of FIG. 4, the magnetic field strength can be, e.g., approximately 67 Gauss at a separation distance of approximately 12 mm between magnetized material 200 and magnetic sensor 204, but can decay exponentially to approximately zero at a separation distance of approximately 75 mm. The sensitivity of magnetic field strength relative to distance can vary based on the material composition, volume, etc., of magnetized material 200 and/or the type of magnetic sensor 204. During operation of the structures discussed herein and/or implementation of methods for identifying bucket deformation, the magnetic field strength of magnetized material 200 as measured in a fixed reference position can indicate a change in the dimensionality of turbine bucket 124. These changes in dimensionality may stem from, e.g., heat transfer to turbine bucket 124 and/or mechanical wear such as stress, strain, creep, etc., experienced by turbine bucket 124 during operation of turbomachine 100 (FIG. 1).

Further components can be provided with turbine bucket 124 to identify deformation thereof over the operating period of turbomachine 100 (FIG. 1). Specifically, a magnetic sensor 204 is affixed or otherwise coupled to a component of turbomachine 100 at a fixed position thereof, e.g., a radially inner surface of shroud 180 and/or other component radially distal to turbine bucket 124. Magnetic sensor 204 can be embodied as one or more instruments for measuring the magnetic field strength at a particular location, e.g., a DC gaussmeter, a magnetometer, an AC/DC detector, a polarity checker, a probe, a hall effect sensor, a field-viewing instrument such as a viewer gel or filing viewer, etc. A computing device 206 can be in communication with magnetic sensor 204, e.g., by way of any currently known or later-developed wired or wireless connection capable of transmitting signals. Computing device 206 can include hardware and/or software for receiving and/or deriving magnetic field strengths of magnetized material 200 detected with magnetic sensor 204, and/or identifying turbine bucket 124 as being deformed or non-deformed based on the values of magnetic field strength received from magnetic sensor 204. Computing device 206 in addition or alternatively can calculate a length dimension of turbine bucket 124 (e.g., length "L"). As is discussed in further detail elsewhere herein, computing device 206 can indirectly calculate the length of turbine bucket 124 based on the magnetic field strength measured with magnetic sensor 204, using, e.g., a look-up table, algorithm, etc., by reference to an initial or non-deformed length of turbine bucket 124.

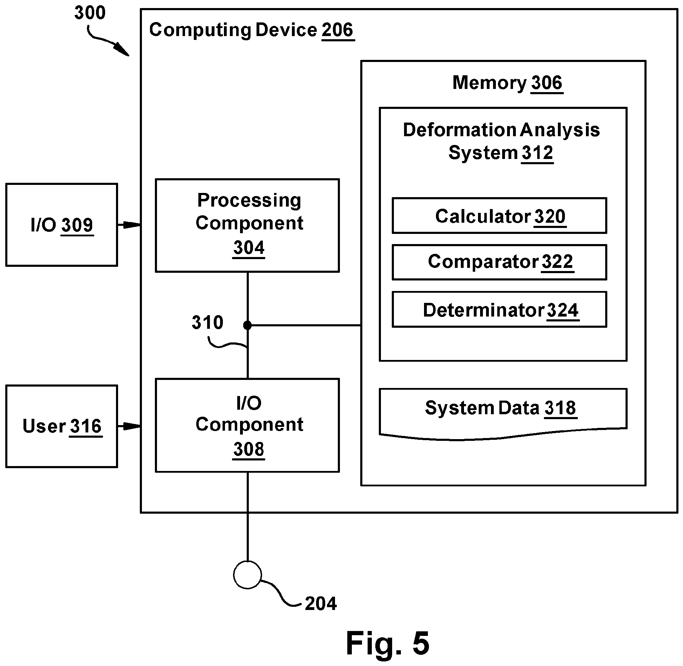

FIG. 5 depicts an illustrative environment 300 where computing device 206 is placed in communication with one or more magnetic sensors 204 according to embodiments. To this extent, environment 300 includes computing device 206 for identifying deformation of turbine bucket(s) 124 (FIGS. 1-3) and/or determining a degree of deformation (e.g., difference(s) in length). Although one magnetic sensor 204 is shown in FIG. 5, it is understood that environment 300 with computing device 206 can be used with multiple magnetic sensors 204, each of which may be configured to measure magnetic field strengths relative to magnetized material 200 (FIGS. 2, 3) in one turbine bucket 124 and/or respective turbine buckets 124.

Computing device 206 is shown including a processing component 304 (e.g., one or more processors), a memory 306 (e.g., a storage hierarchy), an input/output (I/O) component 308, an I/O device 309 (e.g., one or more I/O interfaces and/or devices), and a communications pathway 310. In general, processing component 304 executes program code, such as a deformation analysis system 312 at least partially fixed in memory 306. While executing program code, processing component 304 can process data, which can result in reading and/or writing transformed data from/to memory 306 and/or I/O device 309 for further processing. Pathway 310 provides a communications link between each of the components in computing device 206. I/O component 308 can comprise one or more human I/O devices, which enable a human or system user 316 to interact with computing device 206 and/or one or more communications devices to enable user(s) 316 to communicate with computing device 206 using any type of communications link. To this extent, deformation analysis system 312 can manage a set of interfaces (e.g., graphical user interface(s), application program interface, etc.) that enable user(s) 316 to interact with deformation analysis system 312. Further, deformation analysis system 312 can manage (e.g., store, retrieve, create, manipulate, organize, present, etc.) data, such as system data 318 (including measured magnetic field strengths, calculated bucket lengths, etc.) using any solution.

Computing device 206 can comprise one or more general-purpose or specific-purpose computing articles of manufacture (e.g., computing devices) capable of executing program code, such as deformation analysis system 312 installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, deformation analysis system 312 can be embodied as any combination of system software and/or application software.

Further, deformation analysis system 312 can be implemented using a set of modules, e.g., a calculator 320, a comparator 322, and a determinator 324. In this case, each module can enable computing device 206 to perform a set of tasks used by deformation analysis system 312, and can be separately developed and/or implemented apart from other portions of deformation analysis system 312. One or more modules of memory 306 can display (e.g., via graphics, text, sounds, and/or combinations thereof) a particular user interface on a display component such as a monitor. When fixed in memory 306 of computing device 206 that includes processing component 304, each module can be module a substantial portion of a component that implements the functionality. Regardless, it is understood that two or more components, modules and/or systems may share some/all of their respective hardware and/or software. Further, it is understood that some of the functionality discussed herein may not be implemented or additional functionality may be included as part of computing device 206.

When computing device 206 comprises multiple computing devices, each computing device may have only a portion of deformation analysis system 312 (e.g., one or more modules) thereon. However, it is understood that computing device 206 and deformation analysis system 312 are only representative of various possible equivalent computer systems that may perform a process described herein. To this extent, in other embodiments, the functionality provided by computing device 206 and deformation analysis system 312 can be at least partially implemented by one or more computing devices that include any combination of general and/or specific purpose hardware with or without program code. In each embodiment, the hardware and program code, if included, can be created using standard engineering and programming techniques, respectively.

Regardless, when computing device 206 includes multiple computing devices, the computing devices can communicate over any type of communications link. Further, while performing a process described herein, computing device 206 can communicate with one or more other computer systems using any type of communications link. In either case, the communications link can comprise any combination of various types of wired and/or wireless links; comprise any combination of one or more types of networks; and/or use any combination of various types of transmission techniques and protocols.

Referring to FIGS. 2 and 5 together, embodiments of the present disclosure can provide methods for identifying bucket deformation in a turbomachine. Methods according to the present disclosure can be implemented by way of, e.g., the various structures and components described herein. In particular, methods according to the present disclosure can be implemented as an in-situ process without the components of turbomachine 100, turbine portion 104, and/or turbine bucket 124 being disassembled and/or reconstructed. It is also understood that one or more of the components discussed herein can remain in place during operation of turbomachine 100. As a result, turbine bucket 124, magnetized material 200, magnetic sensor 204, etc., can remain in place within turbomachine 100 as one or more of the various steps described herein are implemented.

Methods according to the present invention include measuring a magnetic field strength of magnetized material 200 positioned within turbine bucket 124, e.g., using magnetic sensor(s) 204. The magnetic field strength of magnetized material 200 can be measured at a stationary reference position, which may be calibrated as part of the same method and/or a different calibration process. For instance, methods according to the present disclosure can include calibrating a position, e.g., within turbine portion 104, where magnetic sensor 204 indicates a magnetic field strength of magnetized material 200 being zero. The calibrated position, in particular, can be located on or proximal to an axis of material deformation of turbine bucket 124 (e.g., substantially parallel with radial axis R), and can be separated from a radially outer end of turbine bucket 124 by a predetermined distance (e.g., 100 mm) such that magnetic sensor(s) 204 is responsive to changes in the length of turbine bucket 124. In addition or alternatively, a portion of magnetic sensor 204 can include a "zero gauss chamber" configured for use with a geomagnetometer to provide a zero gauss reference value to counteract ambient magnetic fields and thereby aid the calibration of magnetic sensor 204. In some instances, the calibration process can performed using a reference turbine bucket 124, without significant deformation, on turbine wheel 122 before reinstalling the inspected turbine bucket 124. The installation and/or replacement of turbine bucket 124 can be performed as part of a separate maintenance process, and/or can be an additional step performed during testing, maintenance, inspection, etc.. In other embodiments, magnetic sensor 204 can be calibrated at the time of manufacture using turbine bucket 124 in an initial state. Regardless of the calibration technique implemented, computing device 206 and/or user 316 can define a "reference field strength" at the position where magnetic sensor(s) 204 is placed and/or calibrated. The reference field strength can be stored, e.g., in memory 306 as system data 318. The reference field strength can indicate an initial magnetic field strength of magnetized material 200 from turbine bucket(s) 124, and/or a magnetic field strength of magnetized material 200 in turbine buckets 124 without significant deformation.

To identify the presence of absence of deformation in turbine bucket(s) 124, calculator 320 of deformation analysis system 312 can calculate a difference between a magnetic field strength measured with magnetic sensor(s) 204 and the reference field strength. Thereafter, comparator 322 can compare the calculated difference with a threshold difference indicative of deformation in turbine bucket 124. In an example embodiment, the threshold difference can be a change in magnetic field strength of at least approximately 50 G. Alternatively, the threshold difference can be a different amount of magnetic field increase and/or decrease, e.g., 5 G, 500 G, 5 Teslas (T), 50 T, etc. Where the threshold difference is not exceeded, determinator 324 of deformation analysis system 312 can identify turbine bucket 124 as being non-deformed. Where the threshold difference is exceeded, determinator 324 of deformation analysis system 312 can identify turbine bucket 124 as being deformed. It is to be understood that the criteria applied to identify turbine bucket 124 as being deformed or non-deformed (e.g., the threshold difference in magnetic field strength) may be identical to or different from external inspection requirements, margins of error, etc. As such, turbine buckets 124 identified as being "deformed" may not be considered "deformed" in a colloquial sense or under different deformation criteria for turbine bucket 124.

Methods of the present disclosure, optionally, can also determine a length of turbine bucket 124 based on the calculated magnetic field strength and/or difference in magnetic field strength relative to the reference magnetic field strength. For example, system data 318 can include a measured or predicted relationship between magnetic field strength and a separation distance between magnetic sensor 204 and turbine bucket 124, such as that depicted in FIG. 4. In this case, calculator 320 can calculate a length of turbine bucket 124, e.g., by an inferential and/or statistical analysis by direct calculations, look-up tables, algorithms for derivation, and/or combinations thereof. In an example embodiment, a magnetic field strength of 50 G may correlate to a change in separation distance of approximately 20 mm. In this example, calculator 320 can add 20 mm to the original or reference length of turbine bucket 124 to yield the length of turbine bucket 124.

Methods according to the present disclosure can also include processes for modifying turbomachine 100 to provide one or more components described herein and/or to implement other method steps. For example turbine bucket 124 can be modified before measuring and analyzing turbine bucket(s) 124 with magnetic sensor(s) 204. Methods according to the present disclosure can therefore include forming recess 202 within airfoil 170 of turbine bucket 124, e.g., at bucket tip 172 thereof. Recess 202 can then be filled with magnetized material 200, e.g., by way of a brazing process adapted to form one or more magnetized metals, alloys, etc., therein. To substantially maintain the original aerodynamic properties of turbine bucket 124, magnetized material 200 and/or an outer surface of turbine bucket 124 can be machined (e.g., polished, cut, burnished, etc.) to be substantially planar with each other and thereby yield a smoothed surface profile with a reduced surface roughness.

It is understood that aspects of the invention further provide various alternative embodiments. For example, embodiments of the present disclosure can include manual use of computing device 206 (e.g., operation by a technician) and/or automated use by the intervention of one or more computer systems operatively connected thereto to provide, e.g., one or more of the various effects discussed herein. It is thus understood that computing device 206 may serve technical purposes in other settings beyond general operation, including without limitation: inspection, maintenance, repair, replacement, testing, etc.

Deformation analysis system 312 can be provided in the form of a computer program fixed in at least one computer-readable medium, which when executed, enables computing device 206 to identify and/or measure deformation in turbine bucket(s) 124. To this extent, the computer-readable medium includes program code which implements some or all of the processes and/or embodiments described herein. It is understood that the term "computer-readable medium" comprises one or more of any type of tangible medium of expression, now known or later developed, from which a copy of the program code can be perceived, reproduced or otherwise communicated by a computing device. For example, the computer-readable medium can comprise: one or more portable storage articles of manufacture; one or more memory/storage components of a computing device; paper; etc.

Embodiments of the present disclosure can provide several technical and commercial advantages, some of which are discussed by way of example herein. For instance, embodiments of the present disclosure can provide a turbine bucket, testing device, and/or kit for measuring and identifying material deformation in components of a turbomachine during its service life. In addition, embodiments of the present disclosure can be included with newly manufactured turbomachines and/or added to existing turbomachines, and can remain in place during operation as part of a larger power generation system or network of power generation devices. Embodiments of the present disclosure can also provide an in-situ methodology for repeated monitoring of components without a partial or complete disassembly of a turbine portion and/or turbomachine.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. It will be further understood that the terms "comprises" and/or" comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A turbomachine (100) comprising:
a rotor wheel coupled to a rotor;
a turbine bucket (124) comprising:
a base (160) mechanically coupled to the rotor wheel,
an airfoil (170) extending radially from the base (160), relative to a rotor axis of the turbomachine (100), wherein the airfoil includes a bucket tip (172) proximal to a radially outer end thereof; and
a magnetized material (200) coupled to the bucket tip (172); and
a stationary component radially distal to the bucket tip (172); and
a magnetic sensor (204) coupled to the stationary component and configured to measure a magnetic field strength of the magnetized material (200); and
a computing device (206) in communication with the magnetic sensor (204), wherein the computing device (206) identifies the turbine bucket (124) as being one of deformed and non-deformed based on the magnetic field strength of the magnetized material (200).

2. The turbomachine (100) of claim 1, wherein the magnetized material (200) comprises a magnetic braze alloy joined to the airfoil (170) via one of a vacuum braze and a weld.

3. The turbomachine (100) of claim 1, wherein the airfoil (170) further includes a recess (202) therein, wherein the magnetized material (200) is housed within the recess (202).

4. The turbomachine (100) of claim 3, wherein a surface of the magnetized material (200) is substantially planar with an outer surface of the airfoil (170).

5. The turbomachine (100) of claim 1, wherein the computing device (206) is further configured to calculate a length of the turbine bucket (124) based on the magnetic field strength of the magnetized material (200).

6. The turbomachine (100) of claim 1, wherein the stationary component comprises a shroud (180).

7. A method for identifying bucket deformation in a turbomachine (100), the method comprising:
measuring a magnetic field strength of a magnetized material (200) positioned within a turbine bucket (124);
calculating a difference between the magnetic field strength and a reference field strength; and
identifying the turbine bucket (124) as being one of deformed and non-deformed based on the calculated difference.

8. The method of claim 7, further comprising calculating a length of the turbine bucket (124) based on the magnetic field strength of the magnetized material.

9. The method of claim 7, wherein the turbine bucket (124) remains coupled to a rotor wheel (112) of the turbomachine (100) during the measuring.

10. The method of claim 7, wherein the magnetized material (200) comprises a magnetic braze alloy joined to the turbine bucket (124) via one of a vacuum braze and a weld.

11. The method of claim 7, further comprising, before the measuring:
calibrating a position where a magnetic field strength of a magnetized material within a non-deformed turbine bucket (124) is zero; and
setting the reference field strength as equal to zero at the calibrated position, wherein the measuring of the magnetic field strength occurs at the calibrated position.

12. The method of claim 7, further comprising, before the measuring:
forming a cavity in a bucket tip (172) of the turbine bucket (174);
filling the cavity with the magnetized material (200); and
machining a surface of the magnetized material (200) to be substantially planar with an outer surface of the bucket tip (172) .

## Patentansprüche

1. Turbomaschine (100), umfassend:
ein Rotorlaufrad, das mit einem Rotor gekoppelt ist;
eine Turbinenschaufel (124), umfassend:
ein Unterteil (160), das mechanisch mit dem Rotorlaufrad gekoppelt ist,
ein Schaufelblatt (170), das sich radial vom Unterteil (160) in Bezug auf eine Rotorachse der Turbomaschine (100) erstreckt, wobei das Schaufelblatt eine Schaufelspitze (172) proximal zu einem radial äußeren Ende davon einschließt; und
ein magnetisiertes Material (200), das mit der Schaufelspitze (172) gekoppelt ist; und
eine stationäre Komponente radial distal zur Schaufelspitze (172); und
einen Magnetsensor (204), der mit der stationären Komponente gekoppelt und konfiguriert ist, um eine Magnetfeldstärke des magnetisierten Materials (200) zu messen; und
eine Datenverarbeitungsvorrichtung (206) in Kommunikation mit dem Magnetsensor (204), wobei die Datenverarbeitungsvorrichtung (206) die Turbinenschaufel (124) basierend auf der Magnetfeldstärke des magnetisierten Materials (200) als eines aus verformt und nicht verformt erkennt.

2. Turbomaschine (100) nach Anspruch 1, wobei das magnetisierte Material (200) eine magnetische Hartlotlegierung umfasst, die mit dem Schaufelblatt (170) über eines aus einem Vakuumhartlot und einer Schweißnaht verbunden ist.

3. Turbomaschine (100) nach Anspruch 1, wobei das Schaufelblatt (170) ferner eine Aussparung (202) darin einschließt, wobei das magnetisierte Material (200) innerhalb der Aussparung (202) untergebracht ist.

4. Turbomaschine (100) nach Anspruch 3, wobei eine Oberfläche des magnetisierten Materials (200) im Wesentlichen planar mit einer Außenoberfläche des Schaufelblatts (170) ist.

5. Turbomaschine (100) nach Anspruch 1, wobei die Datenverarbeitungsvorrichtung (206) ferner konfiguriert ist, um eine Länge der Turbinenschaufel (124) basierend auf der Magnetfeldstärke des magnetisierten Materials (200) zu berechnen.

6. Turbomaschine (100) nach Anspruch 1, wobei die stationäre Komponente eine Ummantelung (180) umfasst.

7. Verfahren zum Erkennen von Schaufelverformung in einer Turbomaschine (100), wobei das Verfahren umfasst:
Messen einer Magnetfeldstärke eines magnetisierten Materials (200), das innerhalb einer Turbinenschaufel (124) positioniert ist;
Berechnen einer Differenz zwischen der Magnetfeldstärke und einer Referenzfeldstärke; und
Erkennen der Turbinenschaufel (124) als eines aus verformt und nicht verformt basierend auf der berechneten Differenz.

8. Verfahren nach Anspruch 7, ferner umfassend das Berechnen einer Länge der Turbinenschaufel (124) basierend auf der Magnetfeldstärke des magnetisierten Materials.

9. Verfahren nach Anspruch 7, wobei die Turbinenschaufel (124) während des Messens mit einem Rotorlaufrad (112) der Turbomaschine (100) gekoppelt bleibt.

10. Verfahren nach Anspruch 7, wobei das magnetisierte Material (200) eine magnetische Hartlotlegierung umfasst, die mit der Turbinenschaufel (124) über eines aus einem Vakuumhartlot und einer Schweißnaht verbunden ist.

11. Verfahren gemäß Anspruch 7, ferner umfassend vor dem Messen:
Kalibrieren einer Position, an der eine Magnetfeldstärke eines magnetisierten Materials innerhalb einer nicht verformten Turbinenschaufel (124) null ist; und
Festlegen der Referenzfeldstärke als gleich null an der kalibrierten Position, wobei das Messen der Magnetfeldstärke an der kalibrierten Position erfolgt.

12. Verfahren gemäß Anspruch 7, ferner umfassend vor dem Messen:
Bilden eines Hohlraums in einer Schaufelspitze (172) der Turbinenschaufel (174);
Füllen des Hohlraums mit dem magnetisierten Material (200); und
Bearbeiten einer Oberfläche des magnetisierten Materials (200), sodass sie im Wesentlichen planar mit einer Außenoberfläche der Schaufelspitze (172) ist.

## Revendications

1. Turbomachine (100) comprenant :
une roue de rotor couplée à un rotor ;
une aube de turbine (124) comprenant :
une base (160) couplée mécaniquement à la roue de rotor,
un profil aérodynamique (170) s'étendant radialement à partir de la base (160), par rapport à un axe de rotor de la turbomachine (100), dans laquelle le profil aérodynamique inclut une pointe d'aube (172) proximale par rapport à une extrémité radialement externe de celui-ci ; et
un matériau magnétisé (200) couplé à la pointe d'aube (172) ; et
un composant stationnaire radialement distal par rapport à la pointe d'aube (172) ; et
un capteur magnétique (204) couplé au composant stationnaire et configuré pour mesurer une intensité de champ magnétique du matériau magnétisé (200) ; et
un dispositif informatique (206) en communication avec le capteur magnétique (204), dans laquelle le dispositif informatique (206) identifie l'aube de turbine (124) comme étant l'une parmi déformée et non déformée sur la base de l'intensité de champ magnétique du matériau magnétisé (200).

2. Turbomachine (100) selon la revendication 1, dans laquelle le matériau magnétisé (200) comprend un alliage à braser magnétique joint au profil aérodynamique (170) par l'intermédiaire de l'une parmi une brasure sous vide et une soudure.

3. Turbomachine (100) selon la revendication 1, dans laquelle le profil aérodynamique (170) inclut en outre un évidement (202) en son sein, dans laquelle le matériau magnétisé (200) est logé au sein de l'évidement (202).

4. Turbomachine (100) selon la revendication 3, dans laquelle une surface du matériau magnétisé (200) est sensiblement plane par rapport à une surface externe du profil aérodynamique (170).

5. Turbomachine (100) selon la revendication 1, dans laquelle le dispositif informatique (206) est en outre configuré pour calculer une longueur de l'aube de turbine (124) sur la base de l'intensité de champ magnétique du matériau magnétisé (200).

6. Turbomachine (100) selon la revendication 1, dans laquelle le composant stationnaire comprend un carénage (180).

7. Procédé d'identification d'une déformation d'aube dans une turbomachine (100), le procédé comprenant :
la mesure d'une intensité de champ magnétique d'un matériau magnétisé (200) positionné au sein d'une aube de turbine (124) ;
le calcul d'une différence entre l'intensité de champ magnétique et une intensité de champ de référence ; et
l'identification de l'aube de turbine (124) comme étant l'une parmi déformée et non déformée sur la base de la différence calculée.

8. Procédé selon la revendication 7, comprenant en outre le calcul d'une longueur de l'aube de turbine (124) sur la base de l'intensité de champ magnétique du matériau magnétisé.

9. Procédé selon la revendication 7, dans lequel l'aube de turbine (124) reste couplée à une roue de rotor (112) de la turbomachine (100) pendant la mesure.

10. Procédé selon la revendication 7, dans lequel le matériau magnétisé (200) comprend un alliage à braser magnétique joint à l'aube de turbine (124) par l'intermédiaire de l'une parmi une brasure sous vide et une soudure.

11. Procédé selon la revendication 7, comprenant en outre, avant la mesure :
l'étalonnage d'une position où une intensité de champ magnétique d'un matériau magnétisé au sein d'une aube de turbine non déformée (124) vaut zéro ; et
le réglage de l'intensité de champ de référence comme étant égale à zéro au niveau de la position étalonnée, dans lequel la mesure de l'intensité de champ magnétique se produit au niveau de la position étalonnée.

12. Procédé selon la revendication 7, comprenant en outre, avant la mesure :
la formation d'une cavité dans une pointe d'aube (172) de l'aube de turbine (174) ;
le remplissage de la cavité avec le matériau magnétisé (200) ; et
l'usinage d'une surface du matériau magnétisé (200) pour être sensiblement plane par rapport à une surface externe de la pointe d'aube (172).
